(19) Europäisches Patentamt
European Patent Office
Office européen des brevets

(11) **EP 2 597 616 A2**

(12) **EUROPEAN PATENT APPLICATION**

(43) Date of publication:
**29.05.2013 Bulletin 2013/22**

(51) Int Cl.:
***G06T 9/00*** *(2006.01)*

(21) Application number: **12193139.8**

(22) Date of filing: **19.11.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.11.2011 RU 2011146617
04.04.2012 KR 20120035063**

(71) Applicant: **Samsung Electronics Co., Ltd.
Suwon-si, Gyeonggi-do, 443-742 (KR)**

(72) Inventors:
• **Kurilin, Ilya Vasilievich
Novosibirsk (RU)**
• **Lee, Ho-keun
Gyeonggi-do (KR)**
• **Safonov, Ilya Vladimirovich
Moscow 119571 (RU)**

(74) Representative: **Waddington, Richard
Appleyard Lees
15 Clare Road
Halifax Yorkshire HX1 2HY (GB)**

(54) **Raster image conversion apparatus, image scanning apparatus, method of converting raster image, and computer-readable recording medium**

(57) A raster image conversion apparatus, a method of converting a raster image, an image scanning apparatus, and a computer-readable recording medium. The method includes dividing the raster image into a background area (201, 303), a single color area (202, 205, 301), and a multicolored area (203, 204, 302), generating metacommands respectively corresponding to the background area (201), the single color area (202, 205), and the multicolored area (203, 204), and generating a metafile based on the generated metacommands, such that the generation of the metacommands includes vectoring a contour of the single color area and generating a metacommand corresponding to the vectored contour.

FIG. 3

EP 2 597 616 A2

**Description**

<u>CROSS-REFERENCE TO RELATED APPLICATIONS</u>

This application claims priority under 35 U.S.C. § 119 from Russian Patent Application No. RU 2011146617, filed on November 17, 2011, in the Russian Federal Service for Intellectual Property, Patents and Trademarks, and Korean Patent Application No. 10-2012-0035063, filed on April 4, 2012, in the Korean Intellectual Property Office, the disclosures of which are incorporated herein by reference in their entireties.

BACKGROUND

1. Field

The present general inventive concept generally relates to a raster image conversion apparatus, an image scanning apparatus, a method of converting a raster image, and a computer-readable recording medium, and more particularly, to a raster image conversion apparatus that can convert a raster image into an electronic form (e-form) metafile, an image scanning apparatus, a method of converting a raster image, and a computer-readable recording medium.

2. Description of the Related Art

Conventional methods of converting a raster image into an electronic form (e-form) provide convenient and efficient ways to store and display information, and involve two distinct benefits.

The first benefit is to store a small amount of information in a form, and the second benefit is to prevent a source image from being deteriorated in a process of converting the source image into an e-form.

Among these image conversion methods, Mixed Raster Content (MRC) (e.g., ISO/IEC JTC1/SC29/WG1 N542, "ITU-T Mixed Raster Content model as JPEG 2000 Architectural Framework, June 30, 1997) is a technique well known to one of ordinary skill in the art. This method involves an expression of an image as a multilayer model and includes different compression methods according to layers in order to reduce a size of a file.

However, an MRC algorithm does not consider a mapping characteristic of a vector graphic expressed on an initial raster image. For example, if an initial electronic text document mapping and printing symbols do not take scaling into consideration, mapping symbols of a scanned text modified by depends on scaling factors of a computer display.

Also, methods that are known to perform a multilayer analysis and store a raster image, select all raster images on additional layers. Therefore, although a source image may include an element of lesser importance within a raster graphic, a raster layer having a similar size to a size of an entire document is stored in the document.

U.S. Patent. Publication No. 2011/0007334 is directed to a method of reducing a size of a file. A method and a system for vectoring a text on a scanned image are disclosed in a technical solution of the corresponding patent application. Also, a vectoring method is suggested to smoothly map symbols.

However, in this method, only a text displayed on the scanned image is analyzed, and thus a vectoring process is not related with other elements of the scanned image.

U.S. Patent No. 7,289,122 is directed to a method of applying a graphic object by using Bezier curves. However, this method manages only an approximate value calculation method and thus does not consider an entire image when converting the entire image into an electronic document form.

<u>SUMMARY</u>

The exemplary embodiments provide a raster image conversion apparatus which can convert a raster image into an electronic form (e-form) metafile, and an image scanning apparatus, a method of converting a raster image, and a computer-readable recording medium.

Additional features and utilities of the present general inventive concept will be set forth in part in the description which follows and, in part, will be obvious from the description, or may be learned by practice of the general inventive concept.

According to the present invention there is provided an apparatus and method as set forth in the appended claims. Other features of the invention will be apparent from the dependent claims, and the description which follows.

The foregoing and/or other features and utilities of the present general inventive concept are achieved by providing a method of converting a raster image, including dividing the raster image into a background area, a single color area, and a multicolored area, generating metacommands respectively corresponding to the background area, the single color area, and the multicolored area, and generating a metafile based on the generated metacommands, wherein the generation of the metacommands includes vectoring a contour of the single color area and generating a metacommand corresponding to the vectored contour.

The method may further include determining the background area as one of a single color background, a gradation background, and a multicolored background.

The generation of the metacommands may include, if the background area is determined as the single color background, generating a metacommand depicting a rectangle having a color of the background area, and if the background area is determined as the gradation background, generating a metacommand determining an inclination direction and a type of a color corresponding to the background area.

The generation of the metafile may include, if the background area is determined as the multicolored background, generating a metafile including a raster image corresponding to the background area.

The method may further include, determining a transparency which is to be applied to the background area, wherein the generation of the metafiles includes generating a metafile comprising a metacommand corresponding to the determined transparency.

The method may further include changing a resolution of a raster image corresponding to the multicolored area, wherein the generation of the metafile includes generating a metafile comprising the raster image having the changed resolution.

The method may further include determining a shape of the multicolored area, and if the determined shape of the multicolored area is not rectangular, dividing the multicolored area into a plurality of rectangular areas, wherein the change of the resolution includes changing resolutions of a plurality of raster images respectively corresponding to the plurality of rectangular areas.

The generation of the metacommands may include generating metacommands respectively corresponding to the plurality of rectangular areas.

The generation of the metacommands may include detecting a contour of the single color area, simplifying the detected contour, and generating a metacommand corresponding to the simplified contour.

The simplifying the detected contour may be simplified as only straight lines and Bezier curves.

The method may further include compressing the generated metacommands, wherein the generation of the metacommands is generated based on the compressed metacommands.

The foregoing and/or other features and utilities of the present general inventive concept may also be achieved by providing a raster image conversion apparatus including a communication interface unit to receive a raster image, a command generator to divide the raster image into a background area, a single color area, and a multicolored area and to generate metacommands respectively corresponding to the background area, the single color area, and the multicolored area, and a file generator to generate a metafile based on the generated metacommands, wherein the command generator vectors a contour of the single color area and generates a metacommand corresponding to the vectored contour.

The command generator may determine the background area as one of a single color background, a gradation background, and a multicolored background, if the background area is determined as the single color background, generate a metacommand depicting a rectangle having a color of the background area, and if the background area is determined as the gradation background, generate a metacommand determining an inclination direction and a type of a color corresponding to the background area.

If the background area is determined as the multicolored background, the file generator may generate a metafile including a raster image corresponding to the background area.

The command generator may detect a contour of the single color area, simplify the detected contour, and generate a metacommand corresponding to the simplified contour.

The file generator may compress the generated metacommands and generate a metafile based on the compressed metacommands.

The foregoing and/or other features and utilities of the present general inventive concept may also be achieved by providing an image scanning apparatus including a scanner to scan an original image to generate a raster image, a command generator to divide the raster image into a background area, a single color area, and a multicolored area and to generate metacommands respectively corresponding to the background area, the single color area, and the multicolored area, and a file generator to generate a metafile based on the generated metacommands, wherein the command generator vectors a contour of the single color area and generates a metacommand corresponding to the vectored contour.

The command generator may determine the background area as one of a single color background, a gradation background, and a multicolored background, if the background area is determined as the single color background, generate a metacommand depicting a rectangle having a color of the background area, and if the background area is determined as the gradation background, determine an inclination direction and a type of a color corresponding to the background area.

The command generator may detect a contour of the single color area, simplify the detected contour, and generate a metacommand corresponding to the simplified contour.

The command generator may simplify the detected contour as only straight lines and Bezier curves.

The foregoing and/or other features and utilities of the present general inventive concept may also be achieved by providing computer-readable recording medium having embodied thereon a computer program to execute a method of converting a raster image, wherein the method includes dividing the raster image into a background area, a single color area, and a multicolored area, generating metacommands respectively corresponding to the background area, the single color area, and the multicolored area, and generating a metafile based on the generated metacommands, wherein the generation of the metacommands includes vectoring a contour of the single color area and generating a metacommand corresponding to the vectored contour.

The foregoing and/or other features and utilities of the present general inventive concept may also be achieved by providing a raster image conversion apparatus, including a command generator to divide a raster image into separate portions based on image color, image content, and image brightness, to generate a first metacommand depicting another raster image corresponding to a multicolored area of the raster image, and to generate a second metacommand depicting a vectored single colored area of the raster image, and a file generator to generate a metafile based on the generated metacommands.

The command generator may determine whether the multicolored area has a rectangular shape, divide the multicolored area into a plurality of rectangular areas if the multicolored area does not have the rectangular shape, and generate metacommands depicting the rectangular areas.

The generated metacommands may include information regarding positions of the separate portions of the divided raster image.

The command generator may detect a contour of the single color area, simplify the detected contour as straight lines and curve sections, and generate metacommands corresponding to the straight lines and the curve sections and a color of the single color area.

The foregoing and/or other features and utilities of the present general inventive concept may also be achieved by providing a raster image conversion apparatus, including a command generator to divide a raster image into separate portions based on image color, image content, and image brightness, and to generate different metacommands corresponding to the separate portions and locations of the image content within the separate portions, and a file generator to generate a metafile based on the generated metacommands.

The image content may include at least one of text and another raster image.

BRIEF DESCRIPTION OF THE DRAWINGS

These and/or other features and utilities of the present general inventive concept will become apparent and more readily appreciated from the following description of the embodiments, taken in conjunction with the accompanying drawings of which:

FIG. 1 is a flowchart illustrating a method of converting a raster image into a metafile according to an exemplary embodiment of the present general inventive concept;

FIG. 2 is a view illustrating a raster image;

FIG. 3 is a view illustrating an order of visualizing categories of an area when a metafile is displayed;

FIG. 4 is a block diagram illustrating a structure of a computer system utilizing the method of FIG. 1;

FIG. 5 is a flowchart illustrating an operation of the method of FIG. 1 of storing a multicolored area in detail;

FIG. 6 is a flowchart illustrating an operation of the method of FIG. 1 of storing a single color area in detail;

FIG. 7 is a view illustrating an operation of tracking a contour of an area according to an exemplary embodiment of the present general inventive concept;

FIGS. 8A and 8B are views illustrating a method of calculating a section of a contour at which a restricted preliminary point is located, according to an exemplary embodiment of the present general inventive concept;

FIG. 9 is a view illustrating a process of sensing a key point of a contour corresponding to a single color area;

FIG. 10 is a view illustrating a simplified contour in a single color area;

FIG. 11 is a flowchart illustrating a process of calculating an approximate value of a contour;

FIG. 12 is a view illustrating modified coordinates located at a key point of a simplified contour, according to an exemplary embodiment of the present general inventive concept;

FIGS. 13A through 13D are views illustrating Bezier curves;

FIG. 14 is a view illustrating a process of calculating check points of a Bezier curve;

FIG. 15 is a view illustrating a process of calculating an approximate value of a Bezier curve;

FIG. 16 is a view illustrating an approximate value of a curve of a single color area formed by continuous Bezier curves, according to an exemplary embodiment of the present general inventive concept;

FIG. 17 is a view illustrating an image displayed by enlarging a single color area of an initial raster image and a mapping result of the single color area after an approximate value is calculated;

FIG. 18 is a block diagram illustrating a structure of a raster image conversion apparatus according to an exemplary embodiment of the present general inventive concept; and

FIG. 19 is a block diagram illustrating a structure of an image scanning apparatus according to an exemplary embodiment of the present general inventive concept.

DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept while referring to the figures.

For the clear interpretation of terminology to be used herein, a metafile is specified as a file format that stores various types of data (in particular, raster data and vector data). A raster image, or bitmap, is a dot matrix data structure representing a generally rectangular grid of pixels, or points of color, viewable via a monitor, paper, or other display medium. A raster image is stored in an image file that can have various formats, such as a Joint Photographic Experts Group (JPEG), a Bitmap (BMP), a Graphics Interchange Format (GIF), etc., but is not limited thereto. In general, a metafile structure may be displayed as a sequence (or a sequence list) of commands (metafile entries) having a series of arguments. When a metafile is executed, a particular job (e.g., a job of visualizing a line section, a job of mapping pieces of a raster image, etc.) corresponding to each of the commands is performed. For example, the metafile may be a Portable Document Format (PDF), an XML Paper Specification (XPS), a PostScript (PS), an Enhanced Metafile (EMF), etc., but is not limited thereto.

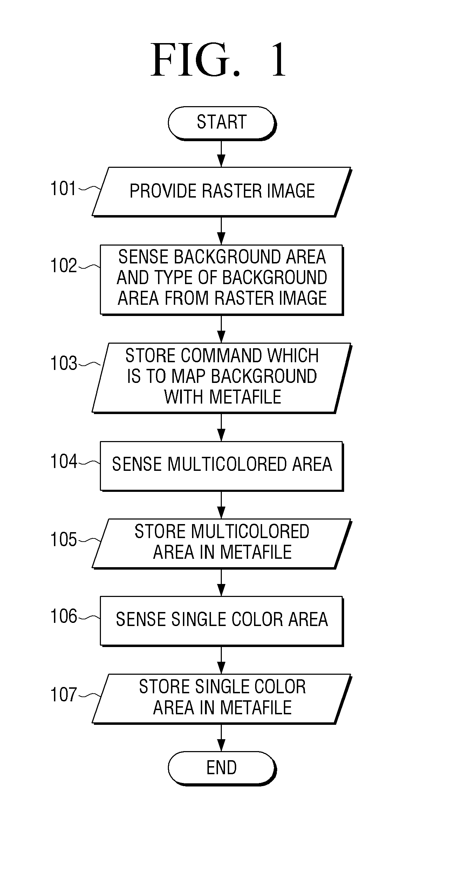

FIG. 1 is a flowchart illustrating a method of converting a raster image into a metafile according to an exemplary embodiment of the present general inventive concept.

Referring to FIG. 1, in operation 101, a raster image is provided. In detail, a document may be captured or scanned to generate a raster image, or a generated raster image may be received from a particular external device.

In operation 102, a background area and a background type of the raster image are sensed. The background type may include one of a single color background, a gradation background, and a multicolored background, but is not limited thereto. Here, the single color background is a background area having an approximately uniform intensity (i.e., brightness) and color. The gradation background is a background area in which brightness and color are uniformly changed (i.e., may be expressed as a detailed function). The multicolored background is a background area of a raster image that does not correspond to the single color background and the gradation background. For example, a background of a raster image including characters such as "a," "b," or "c," for example, may be classified as a multicolored background.

In operation 103, the sensed background is defined as a command (or a metacommand) of a metalanguage corresponding to a formation of a metafile. For example, types of backgrounds may be referred to as commands of metafiles, but are not limited thereto.

The single color background may be defined with a command of a metafile representing a background color. The gradation background may be defined with a command of a metafile representing an inclination direction and a range of brightness or a color. The multicolored background may correspond to a background raster image stored in a metafile.

A background may have transparency, which is not mapped in a generating process, when a metafile is executed (or played). In other words, in the above-described process, transparency is not applied to a background. However, transparency may be set in a background. Also, the above-described modification and modifications in other parts are possible.

In operation 104, a multicolored area including the raster image or a complicated picture is sensed. Accordingly, the multicolored area is a consistent pixel (or a point) group of a raster image restricted to a part of an initial raster image.

In operation 105, the sensed multicolored area is stored as a raster image including an appropriate command of a metafile within the metafile. Furthermore, a job of determining positions of a parameter of the multicolored area and parameters of an image is also performed.

In operation 106, single color areas that are connected to each other (i.e., areas having approximately uniform brightness and color) are sensed. The single color areas may be defined with a series of graphic commands that are to map vector graphic elements of the metafile. Accordingly, a job of calculating an approximate value of shapes of the single areas may be performed.

In operation 107, a result of the vectored single areas is stored in the metafile.

The background area, the single color area, and the multicolored area are each sensed separately according to the method as illustrated in FIG. 1 but also may be sensed simultaneously. Furthermore, the background area, the single color area, and the multicolored area are stored separately in the metafile according to the method as illustrated in FIG. 1 but also may be stored in the metafile simultaneously.

As described above, the method of converting the raster image into the metafile according to the present embodiment may reduce a size of the metafile. Accordingly, since the raster image is not stored within the metafile, an image file may be compressed without experiencing a loss in quality.

The method according to FIG. 1 suggests an effective and efficient access method in terms of size with respect to a quality of an image file. In detail, this is because each area in the image file is stored according to the most appropriate method. In particular, a depiction by a vector of the single color area provides an independence of mapping of the single color area from a visualization range (e.g., a printing range). That is, conventional enlargement of a normal raster image causes a deterioration of the raster image, but the method according to FIG. 1 performs vectoring with respect to the single color image and thus does not cause the deterioration of the raster image even when the raster image is enlarged.

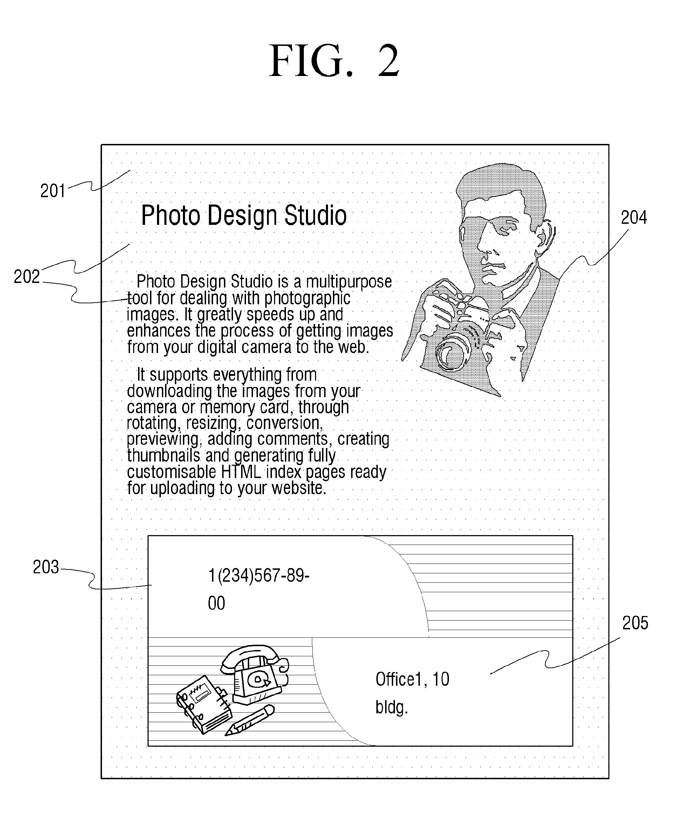

FIG. 2 illustrates a raster image.

Referring to FIG. 2, the raster image includes a background area 201, single color areas 202 and 205, a multicolored area 203 having a rectangular shape, and a multicolored area 204 not having a rectangular shape.

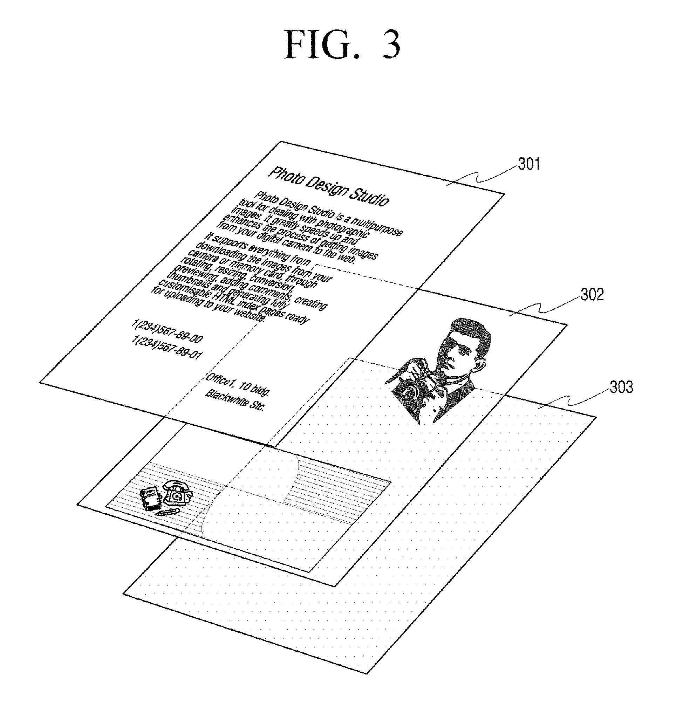

FIG. 3 is a view illustrating an order of visualizing categories of an area when a metafile is displayed. An order of storing areas of an image corresponds to an order of visualizing areas as illustrated in FIG. 1. For example, the visualization of the metafile frequently occurs when transparent or semi-transparent layers or areas are overlaid on top of one another. When the metafile is being mapped, a background area 303 is a lower layer, and a multicolored area 302 and a single color area 301 are overlaid on the background area 303, respectively.

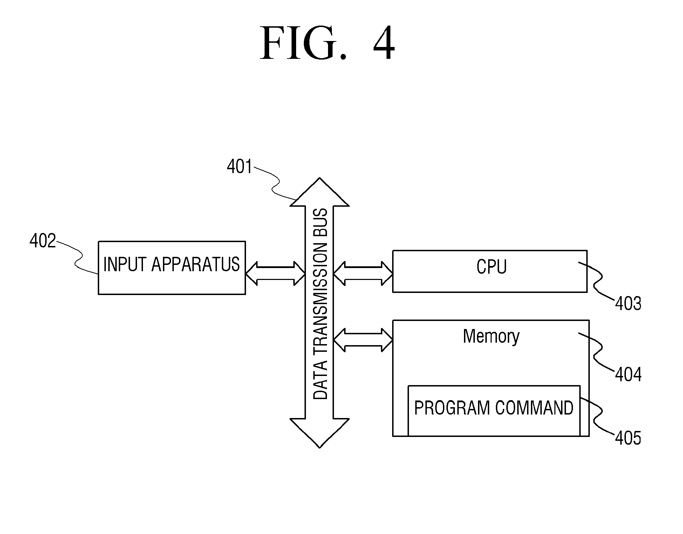

FIG. 4 is a block diagram illustrating a structure of a computer system realizing the method of FIG. 1, according to an exemplary embodiment of the present general inventive concept.

Referring to FIG. 4, the computer system converts a raster image into a metafile and includes an input apparatus 402 which receives an initial raster image, a processor 403, and a memory 404 which stores a command of a program 405. A data transmission among elements of the computer system is performed through a data transmission bus 401.

The input apparatus 402 is an apparatus that receives or generates the initial raster image and may be realized as a digital camera, a memory storing a screen shot, etc., but is not limited thereto. A metafile generated as a result of a performance of a program command is stored in a memory. Here, the metafile stored in the memory may be transmitted to a printer or a display apparatus and may be stored in an additional storage unit.

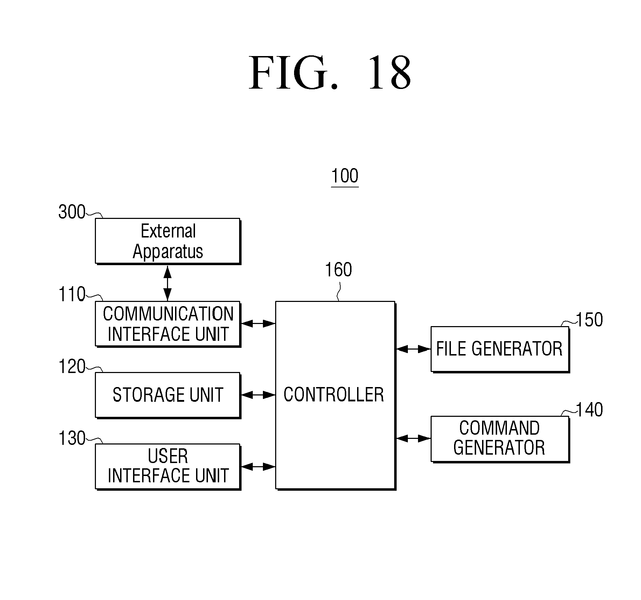

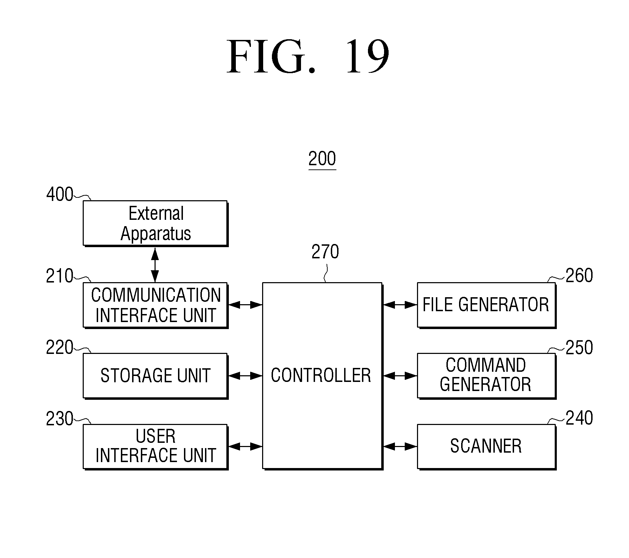

In the present exemplary embodiment, the computer system includes only four elements but may include elements besides the above-described elements. The computer system may be any device which may use a user graphic interface such as a personal computer (PC), a portable phone, a TV, a multifunction peripheral (MFP), or the like. Examples of applying the computer system as the PC and the MFP will be described later with reference to FIGS. 18 and 19.

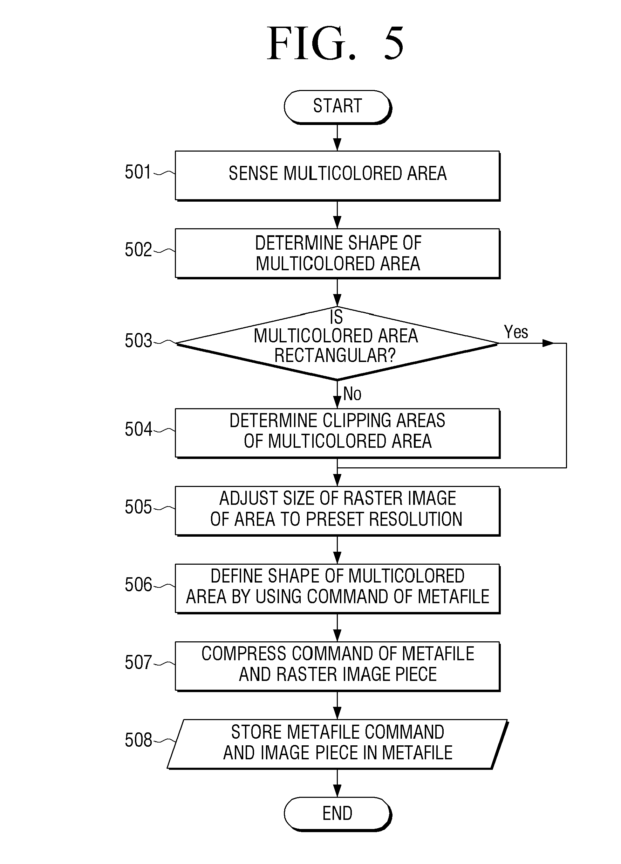

FIG. 5 is a flowchart illustrating operation 105 of the method of FIG. 1 in detail.

Referring to FIG. 5, in operation 501, a multicolored area is sensed. The multicolored area may be a consistent pixel group of a raster image restricted to a part of an initial raster image. Therefore, the consistent pixel group may be sensed as the multicolored area in the raster image.

In operation 502, a shape of the multicolored area is determined. For example, a determination may be made as to whether an identified form of the multicolored area is rectangular, circular, oval, etc., but is not limited thereto.

In operation 503, a determination is made as to whether the determined shape of the multicolored area is rectangular. Accordingly, only a rectangular image may be stored in a metafile, and thus whether the multicolored area is rectangular may be determined.

If it is determined in operation 503 that the multicolored area is not rectangular, a clipping area of the multicolored area is determined in operation 504. As described above, only a rectangular image may be stored in a metafile, and thus a multicolored area not having a rectangular shape may be divided into a plurality of rectangular clipping areas. Accordingly, as illustrated in FIG. 5, the multicolored area not having the rectangular shape is divided into the plurality of clipping areas and thus may be further accurately mapped in operation 504.

If it is determined in operation 503 that the multicolored area is already rectangular, operation 504 is skipped and the method proceeds directly to operation 505.

In operation 505, a size of a raster image of the multicolored area is adjusted to a preset resolution. In detail, a scanned initial raster image generally has a resolution of 300 dots per inch (DPI), and a display has a resolution of 72 DPI or 86 DPI. In this point, the raster image of the multicolored area may be reduced in a shape (or in a preset size) having a resolution compatible with the display.

In operation 506, the shape of the multicolored area is defined by using a command of the metafile. For example, the multicolored area having the rectangular shape may be defined by using a matrix transformation, a size of a stored image piece, a compression method, a color space, etc., but is not limited thereto. Here, the matrix transformation may reflect a lot of parameters affecting mapping of the image piece when the metafile is displayed. Examples of these parameters include a resolution of a visualization of the image piece (this resolution may be different from a resolution of the initial raster image), a shift of the image piece corresponding to coordinates of a document visualized by a play result of the metafile, a rotation angle, etc., but is not limited thereto. The multicolored area not having the rectangular shape may be defined by using a series of graphic commands that are used to define clipping areas.

In operation 507, the command of the metafile and the raster image piece are compressed. Although the present exemplary embodiment as illustrated in FIG. 5 includes the command of the metafile and the raster image being compressed, the compression operation is not necessary and thus may be omitted. Also, a compression method selected in the corresponding metafile may be used. For example, a lossless compression method may be applied to the command of the metafile, and a lossy compression method may be applied to compress the raster image piece.

In operation 508, the metafile command and the image piece are stored in the metafile. In detail, the compressed metafile command and raster image piece may be stored in the metafile.

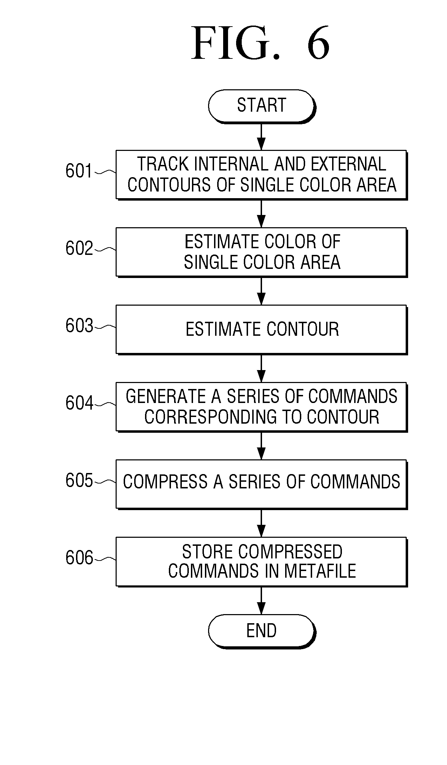

FIG. 6 is a flowchart illustrating operation 107 of the method of FIG. 1 in detail.

As described above, a single color area may be stored as depictions of a color and a shape of each area by using a series of graphic commands of a metafile. If a single color area of a raster image is stored by using a vector method, the single color area has features of high-quality area mapping and view scaling.

Referring to FIG. 6, in operation 601, internal and external contours of the single color area are tracked. Here, the single color area may have only the external contour without the internal contour. Also, the single color area may have one external contour or a plurality of internal contours.

In operation 602, a color filled in the single color area is defined.

In operation 603, a contour is approximated to a series of sections by using straight lines and curves supported in a format of a metafile in which a point of the contour is selected.

In operation 604, the series of approximated sections and the color filled in the single color area are defined with appropriate commands of the metafile.

In operation 605, the defined commands are compressed.

In operation 606, the compressed commands are stored in the metafile.

Operation 503 of FIG. 5, which describes clipping areas of the multicolored area that does not have the rectangular shape, may also be applied to the single color area, except that only the external contour exists. Therefore, the above-described method may be applied to the clipping areas. In detail, the clipping areas of the multicolored area not having the rectangular shape may be defined as a series of approximated sections.

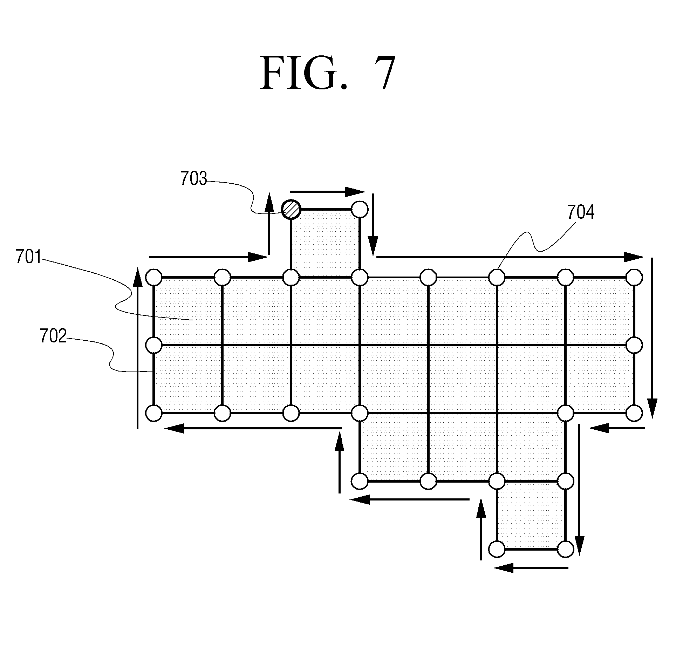

FIG. 7 is a view illustrating an operation of tracking a contour of an area according to an exemplary embodiment of the present general inventive concept.

After a single color area is sensed, elements of the single color area may be separated from a background, and the single color area may be expressed as a linked pixel group. In general, when a raster image is described, positions of pixels are defined by coordinates, and the pixels have square shapes.

As illustrated in FIG. 7, a contour 702 is defined as a boundary between a background and the sensed single color area

Referring to FIG. 7, pixels of the single color area are designated by dark gray squares 701. Therefore, the contour 702 passes points allocated to vertices of the pixels and points displayed with white points 704. Detailed points of the contour 702 have virtual coordinates that are not integers. A process of tracking the contour 702 starts from a start point 703 of the contour 702 and proceeds along the contour 702 in a predetermined direction until reaching the start point again. A tracking direction of the contour 702 may be determined by a required condition of a formation of a selected metafile. For example, the "non-zero winding rule" defines that an external contour moves in a clockwise direction, and an internal contour moves in counter-clockwise direction. According to this rule, a single color area may be accurately filled with a color specified when a metafile is being displayed.

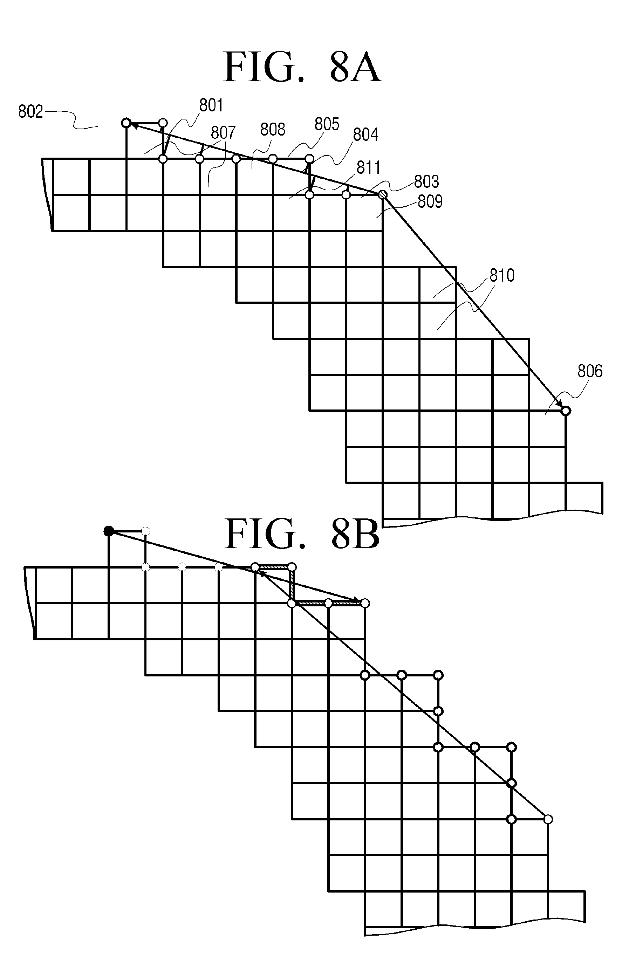

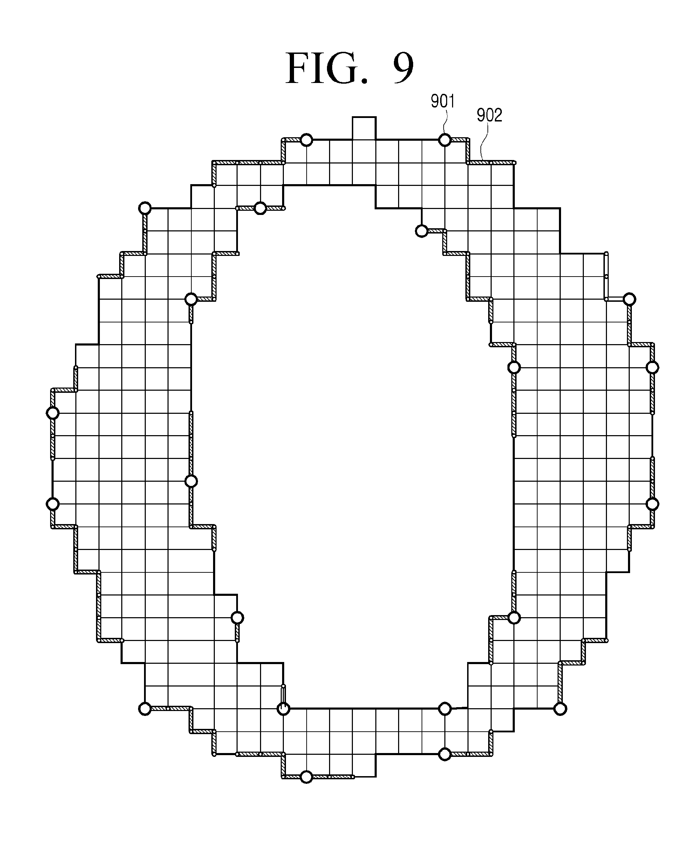

After the contour of the single color area is tracked, a number of elements of the contour is reduced through a definition of a most meaningful point of the contour. A method of defining the most meaningful point of the contour includes the following two operations, as depicted in FIGS. 8A, 8B, and 9. In the first operation, as illustrated in FIGS. 8A and 8B, a contour piece in which a restricted preliminary meaningful point is positioned is defined. In the second operation, as illustrated in FIG. 9, one of possible combinations of meaningful points providing a minimum error is selected.

FIGS. 8A and 8B illustrate a method of calculating a section of a contour in which a restricted preliminary meaningful point is located, according to an exemplary embodiment of the present general inventive concept.

A pair of points maintains a longest distance therebetween so as to correspond to each point of a contour corresponding to a predetermined standard. For example, in FIG. 8A, points 802 and 806 (i.e., a pair of points) maintain a longest distance from each other so as to correspond to points of a contour 803. In the present exemplary embodiment, contours are located in approximated straight lines. Also, if an approximate error does not exceed a preset value, two points of a contour maintain the longest distance from each other. Here, the approximate error may be calculated through a sum of a square of each point of an approximate position of a contour 805 and a distance 801 from an appropriately approximated line 804.

A set of pairs of points keeping distances from each other allows a key point to be sensed in order to define a position of a contour. For example, a point 809 of FIG. 8A keeps the longest distance from a point group of a contour displayed with points 807. Also, a point 808 keeps the longest distance from all points of a contour displayed with points 810. Therefore, the largest numbers of the points 808 and 809 contact each other in an analyzed fragment. Therefore, a boundary of a position of a contour 811 is defined in order to sense a key point.

FIG. 8B illustrates a particular position 812 of a contour preferred for sensing a key point, which is represented by a shaded area.

FIG. 9 is a view illustrating a single color area having a particular position of a contour preferred for sensing a key point. Here, the particular position is displayed with a shaded area 902.

One key point is detected from the determined particular position. In detail, a plurality of possible key points in the determined particular position may be combined with a plurality of possible key points in another particular position. Also, one of these key points may be detected in each particular position having a minimum error occurring when estimating a contour formed of a consecutive straight line. A key point 901 is detected according to this result and is illustrated in FIG. 9.

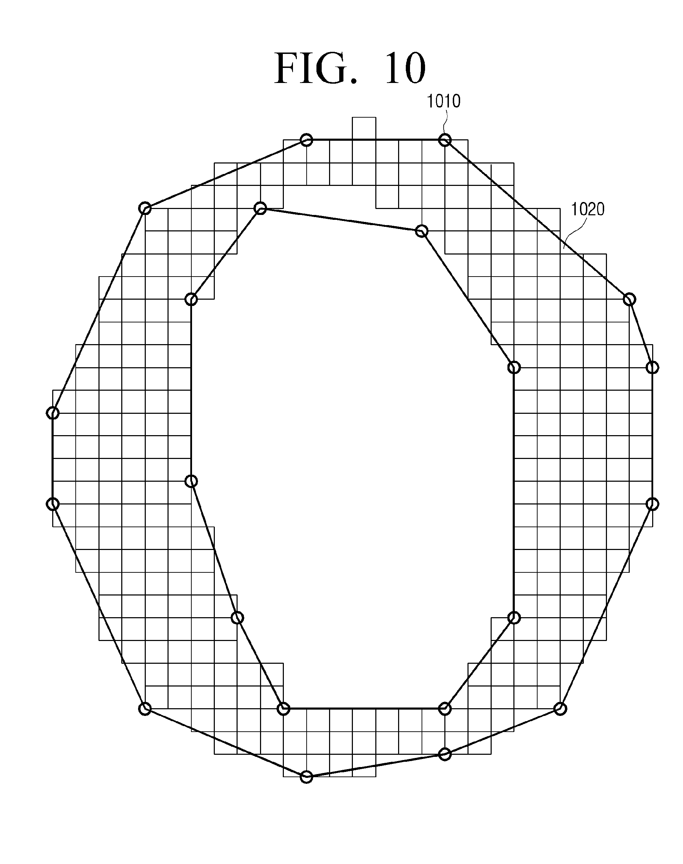

An approximate value result of combinations of straight line sections including minimum errors is illustrated in FIG. 10.

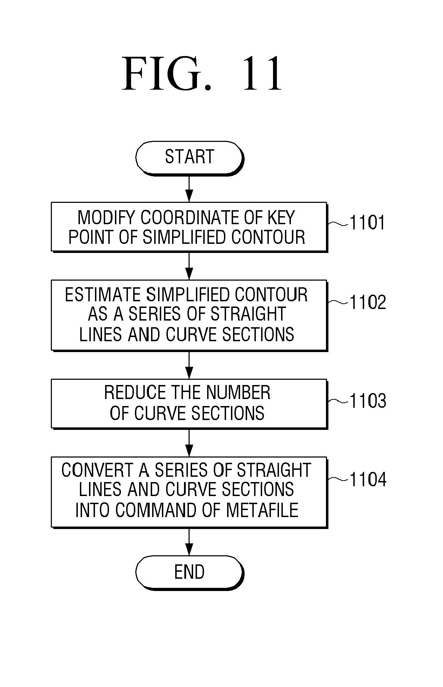

A process of approximating a contour is performed by using a series of straight lines 1020 and curve sections based on a key point 1010 of the contour. This process of calculating an approximate value of a contour is illustrated in FIG. 11.

In operation 1101, a coordinate of a key point of a simplified contour of a single color area is modified.

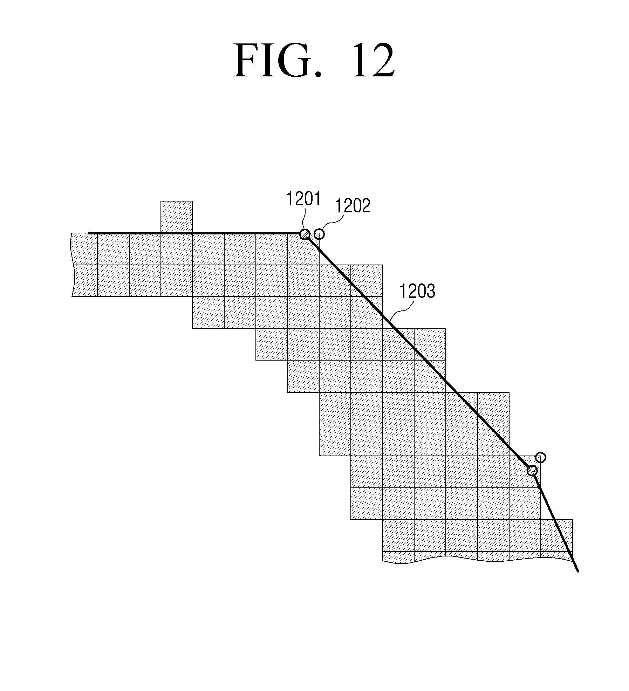

In detail, as illustrated in FIG. 12, a newly estimated section 1203 corresponds to a new key point 1201 of a particular coordinate 1202 so as to have a minimum error due to an approximation of a contour. Therefore, the modification of the coordinate is restricted to the vicinity of the key point 1202.

In the present exemplary embodiment, a predefined vicinity corresponds to one pixel size. More specifically, a distance of a new key point from an initial key point does not exceed half of a pixel.

In operation 1102, an approximation is performed by using a straight line and a curve section corresponding to a format of a metafile from which a simplified contour defined by a particular key point is selected. As such, a number of used speeds of a vector graph and the number of key points are accurately defined.

In operation 1103, the number of curves is reduced to soften mapping of a contour or have the small number of required graphic commands of the metafile in a process of playing the metafile.

In operation 1104, a series of straight lines and curve sections are converted into a command depicted in the metafile.

A contour of a single color area may be approximated by using two graphic functions (a straight light section and a third order Bezier curve section) supported in a majority of existing metafiles. In detail, a display command of the straight line section generally includes an argument that defines a start and an end of a section. A visualization command of the third order Bezier curve has an argument which defines a start and an end of a curve, normalized two check points of the curve, and a shape of the curve.

The Bezier curve is used to describe a position of a contour and is applied to a key point of a contour at which two sections overlaps with each other. Therefore, a triangle is analyzed to calculate a parameter of the Bezier curve. Here, one vertex of the triangle is a key point, and two sides of the triangle are approximated sections adjacent to the key point.

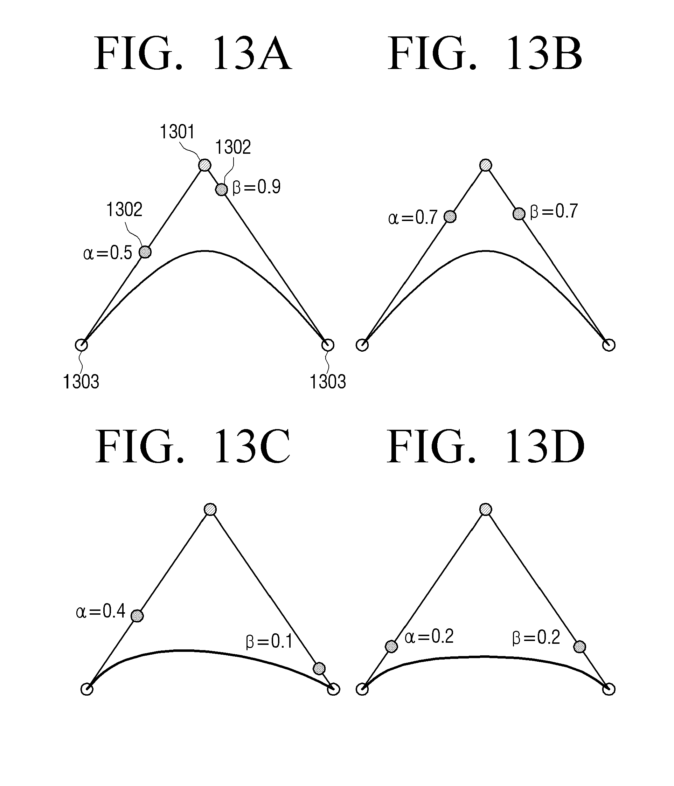

Referring to FIG. 13A through 13D, check points 1302 of a Bezier curve are located on sides adjacent to a peak 1301 in order to simplify a calculation of a parameter of the Bezier curve. Here, two check points 1302 of the Bezier curve are defined two parameters $\alpha$ and $\beta$ and has a range between 0 and 1, and variations in the two parameters $\alpha$ and $\beta$ are illustrated in FIGS. 13A through 13D. Values of parameters illustrated in FIGS. 13A through 13D are only illustrative examples and are not limited thereto.

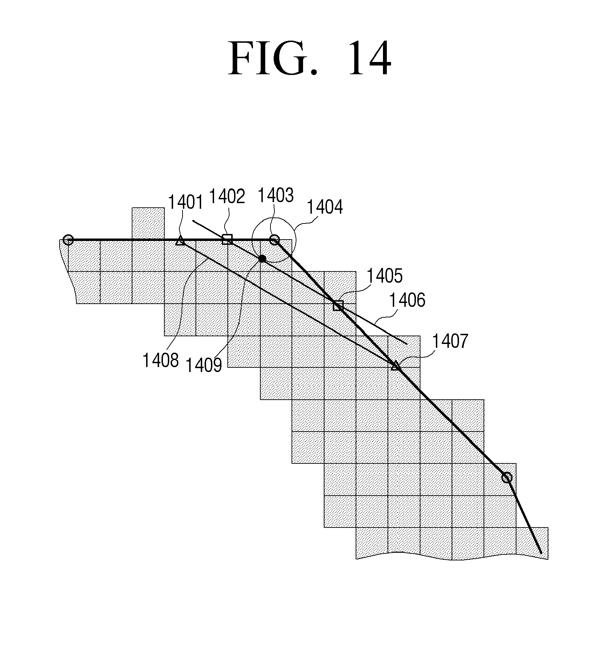

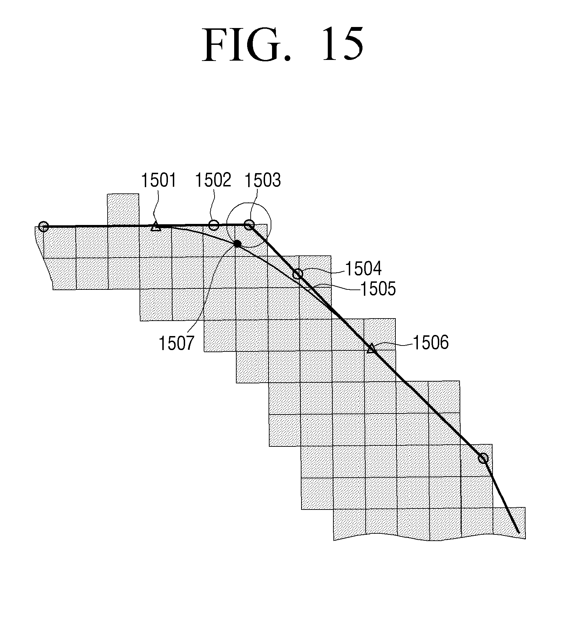

FIGS. 14 and 15 are views illustrating a process of calculating check points of a Bezier curve.

Referring to FIG. 14, average points 1401 and 1407 of a section crossing a key point 1403 of a contour analyzed in a previous operation are calculated. A straight line 1408 passing through the calculated average points 1401 and 1407 is defined. An adjacency of a key point 1409 is restricted by a circle 1404 having a predefined radius. Here, if the radius is multiplied by coefficient $\sqrt{0.5}$, a result of the multiplication may correspond to a side length of a pixel of a raster image. A straight line 1406 which is moved in parallel crosses an approximated section of points 1402 and 1405 which may be defined with check points of Bezier curves $\alpha$ and $\beta$, similarly as illustrated in FIGS. 13A through 13D, for example. Here, values of $\alpha$ and $\beta$ are equal to a normalized length of a section formed by cutting the straight line 1406 and is accurate within a proportional coefficient. For example, as illustrated in FIG. 14, the coefficient $\alpha$ is equal to a ratio between a length of a section formed by the points 1401 and 1402 and a length of a section formed by points 1401 through 1403 and is multiplied by the proportional coefficient. Here, the proportional coefficient may be 4/3. In this case, a Bezier curve passes a cross point adjacent to key points 1409 and 1509.

A Bezier curve corresponding to a calculated parameter is illustrated in FIG. 15. Referring to FIG. 15, an approximated Bezier curve 1505 passes average points 1501 and 1506, and check points 1502 and 1504 of a curve are calculated according to the above-described method.

After a parameter of a Bezier curve is calculated, a process of checking whether check points of the Bezier curve correspond to the number of states is performed. Parameter $\gamma = 2 - \sqrt{(2-\alpha)(2-\beta)}$ is calculated in this operation. If parameter $\gamma$ satisfies allowed range ($0,55 < \gamma \leq 1$), parameters $\alpha$ and $\beta$ are not modified. If a state of the parameter $\gamma$ is $\gamma \leq 0,55$, a check point of the Bezier curve is changed to a value corresponding to $\alpha = \beta = 0,55$. If the state of the parameter $\gamma$ is $\gamma > 1$, an approximate curve of two sections of a straight line restricted by appropriate average points is change, and the two sections are adjacent to the analyzed check points. For example, in FIG. 15, if the state of the parameter $\gamma$ is $\gamma > 1$, the Bezier curve 1504 may be replaced with a first section restricted by points 1501 and 1503 and a second section restricted by points 1503 and 1506. Similar to FIG. 14, an adjacency of a key point 1507 with respect to the point 1503 is restricted by a circle 1508 having a predefined radius.

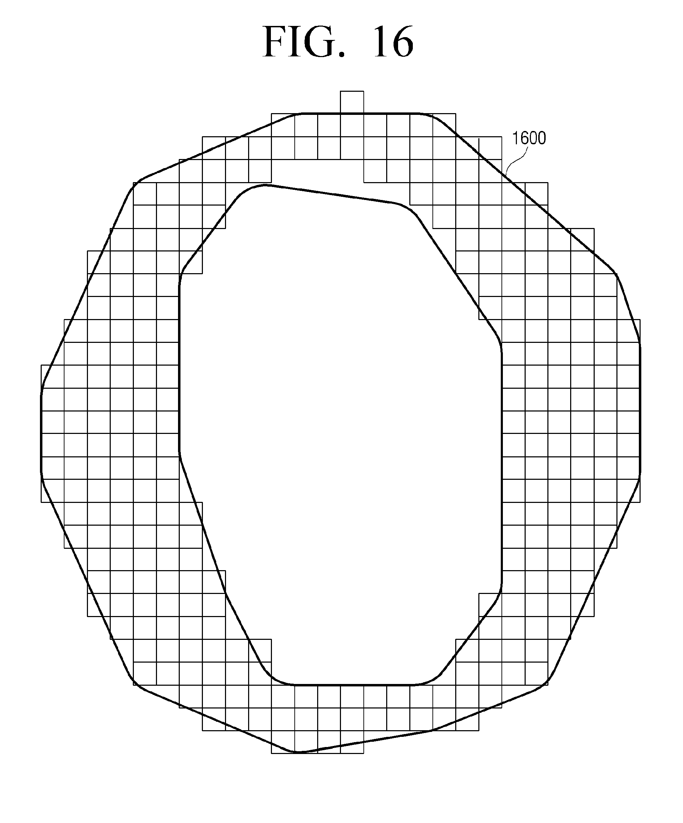

FIG. 16 is a view illustrating an approximate value of a curve of a single color area formed by continuous Bezier curves 1600, according to an exemplary embodiment of the present general inventive concept.

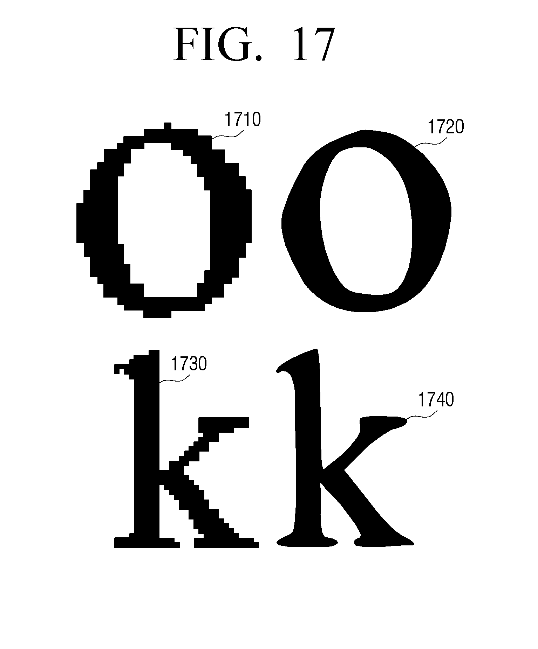

FIG. 17 is a view illustrating an image displayed by enlarging a single color area of an initial raster image and a mapping result of the single color area after an approximate value is calculated. Referring to FIG. 17, provided approximate values correspond to vector depictions of area shapes, and thus their mapping does not depend on view scales. FIG. 17 clearly illustrates the pixilated features of initial raster images 1710 and 1730, as well as an effect of the mapping result of the single color area after the approximate value is calculated (see letters 1720 and 1740, respectively).

FIG. 18 is a block diagram illustrating a structure of a raster image conversion apparatus 100 according to an exemplary embodiment of the present general inventive concept.

Referring to FIG. 18, the raster image conversion apparatus 100 includes a communication interface unit 110, a storage unit 120, a user interface unit 130, a command generator 140, a file generator 150, and a controller 160. The raster image conversion apparatus 100 may be a personal computer (PC), a notebook/laptop computer, a tablet computer, etc., but is not limited thereto.

The communication interface unit 110 is formed to connect the raster image conversion apparatus 100 to an external apparatus 300. The external apparatus 300 may be any type of image capturing device such as an image scanning apparatus, an image copying device, a camera, a camcorder, etc., but is not limited thereto. The communication interface unit 110 may be connected to the external apparatus 300 via a wired or wireless connection through a local area network (LAN) and/or the Internet, or may be directly connected to the external apparatus 300 through a universal serial bus (USB) port, for example.

The communication interface unit 110 may receive a raster image from the external apparatus 300. Accordingly, the raster image is transmitted to the raster image conversion apparatus 100 as an image file such as a Joint Photographic Experts Group (JPEG), a Bitmap (BMP), a Graphics Interchange Format (GIF), etc., but is not limited thereto. The communication interface unit 110 may transmit a generated metafile to the external apparatus 300.

The storage unit 120 stores the raster image received from the external apparatus 300. The storage unit 120 also stores the metafile generated by the file generator 150. The storage unit 120 may be an internal storage unit, such as a hard disk, etc., or may be an external storage medium, such as a removable disk including a USB memory, a flash drive, a web server through a network, a database, etc., but is not limited thereto.

The user interface unit 130 includes a plurality of function keys to allow a user to set or select various types of functions supported by the raster image conversion apparatus 100, and may display various types of information provided within the raster image conversion apparatus 100. The user interface unit 130 may include an interface that simultaneously produces an output based on a received input, such as a touch screen, motion sensor, etc., or may be a combination of an input unit such as a mouse, a keyboard, a touch pad, a roller ball, etc., and an output unit (i.e., a display unit), such as a cathode ray tube (CRT) monitor, a liquid crystal display (LCD) monitor, a light-emitting diode (LED), a plasma screen, etc., but is not limited thereto.

The user interface unit 130 may select the raster image which has been converted into the metafile and select a type of the metafile to be converted. The type of the metafile may be a Portable Document Format (PDF), XML Paper Specification (XPS), a PostScript (PS), an Enhanced Metafile (EMF), etc., but is not limited thereto.

The command generator 140 divides the raster image into a background area, a single color area, and a multicolored area. Here, the background area is a consistent pixel group consistent in the whole part of the raster image. The multicolored area is a consistent pixel group of the raster image restricted to a part of the raster image. The single color area is an area that has an approximately uniform brightness and color.

The command generator 140 generates metacommands respectively corresponding to the background, single color, and multicolored areas. In detail, the command generator 140 determines the background area as one of a single color background, a gradation background, and a multicolored background. If the background area is determined as the single color background or the gradation background, the command generator 140 may generate a metacommand corresponding to the appropriate background type. If the background area is determined as the single color background, the command generator 140 may generate a metacommand which depicts a rectangular shape having a color of the background area. If the background area is determined as the gradation area, the command generator 140 may generate a metacommand which determines an inclination direction and a type of a color corresponding to the background area.

The command generator 140 determines whether the multicolored area is a rectangular shape. If the multicolored area does not have the rectangular shape, the command generator 140 may divide the multicolored area into a plurality of rectangular areas and generate metacommands that depict positions, etc. of the rectangular areas.

The command generator 140 may detect a contour of the single color area, simplify the detected contour as straight lines and Bezier curve sections, and generate metacommands corresponding to a series of straight lines and curve sections.

The file generator 150 generates the metafile based on the generated metacommand. In detail, the file generator 150 may generate the metafile including a raster image corresponding to the metacommand and the areas generated by the command generator 140. For example, the file generator 150 may include only the metacommands corresponding to the single color background and the gradation background in the metafile and may include a separate raster image corresponding to the multicolored background and a metacommand depicting the corresponding raster image in the metafile.

The file generator 150 may perform scaling to lower a resolution of the raster image corresponding to the multicolored background and may include the scaled raster image in the metafile.

Also, the file generator 150 may include a raster image corresponding to the multicolored area and a metacommand depicting a position, etc. of the corresponding raster image in a form corresponding to the multicolored background in the metafile. The file generator 150 may include raster images respectively corresponding to clipping areas, into which the multicolored area is divided if the multicolored area does not have the rectangular shape, and metacommands depicting positions of the raster images in the metafile. Also, the file generator 150 may perform scaling with respect to the raster image corresponding to the multicolored area and may include the scaled raster image in the meta file.

For the single color area, the file generator 150 may include a vectored metacommand in the metafile. As described above, in the present exemplary embodiment, only a metacommand corresponding to a single color area is included in a metafile, and thus a metafile having a smaller size may be generated.

The file generator 150 may perform a lossless compression to include the metacommands in the metafile.

The controller 160 controls elements of the raster image conversion apparatus 100. In detail, if a raster image to be converted is selected and a conversion command is input through the user interface unit 140, the controller 160 may control the command generator 140 to generate a metacommand corresponding to the selected raster image and control the file generator 150 to generate a metafile including the generated metafile.

As described above, the raster image conversion apparatus 100 of FIG. 18 may divide an input raster image into a background area, a single color area, and a multicolored area and generate a metacommand according to a method optimized with respect to the background, single color, and multicolored areas to generate a metafile. Therefore, the raster image conversion apparatus 100 may generate a metafile having a small size. Also, the raster image conversion apparatus 100 may vector the single color area and store a command corresponding to the vectored single color area in the metafile. Therefore, the raster image conversion apparatus 100 may generate a metafile having a smaller size.

FIG. 19 is a block diagram illustrating a structure of an image scanning apparatus 200 according to another exemplary embodiment of the present general inventive concept.

Referring to FIG. 19, the image scanning apparatus 200 includes a communication interface unit 210, a storage unit 220, a user interface unit 230, a scanner 240, a command generator 250, a file generator 260, and a controller 270. Here, the image scanning apparatus 200 may be a multifunction peripheral (MFP) that may include functions of a copier, a fax machine, and a scanner, using a single apparatus.

The communication interface unit 210 is formed to connect the image scanning apparatus 200 to an external apparatus 400. The communication interface unit 210 may be connected to the external apparatus 400 via a wired or wireless connection through a LAN and/or the Internet, or may be directly connected to the external apparatus 400 through a USB port, for example.

The communication interface unit 210 may transmit a raster image generated by the scanner 240, which will be described later, to the external apparatus 400. The communication interface unit 210 may transmit a metafile generated by the file generator 260, which will be described later, to the external apparatus 400.

The storage unit 220 may store the raster image received from the external apparatus 400, or may store a raster image generated by the scanner 240, which will be described later.

The storage unit 220 stores the metafile generated by the file generator 260 which will be described later. The storage unit 220 may be realized as an internal storage medium of the image scanning apparatus 200 or an external storage medium, e.g., a removable disk including a USB memory, a web server through a network, etc., but is not limited thereto.

The user interface unit 230 includes a plurality of function keys to allow a user to set or select various types of functions supported by the image scanning apparatus 200 and may display various types of information provided within the image scanning apparatus 200. The user interface unit 230 may include an apparatus that simultaneously produces an output based on a received input, such as a touch pad, or may include a combination an input unit such as a mouse, a keyboard, a roller ball, etc., and a display unit such as a CRT monitor, an LCD monitor, an LED, a plasma screen, etc., but is not limited thereto.

The user interface unit 230 may receive a scan command or a metafile generating command and may select a type of a metafile to be converted. The type of the metafile may include a PDF, an XPS, a PS, an EMF, etc., but is not limited thereto.

The scanner 240 scans an original image to generate a raster image.

The command generator 250 divides the raster image into a background area, a single color area, and a multicolored area. Here, the background area is a pixel group consistent in a whole part of the raster image. The multicolored area is a consistent pixel group of the raster image restricted to a part of the raster image. The single color area is an area having an approximately uniform brightness and color.

The command generator 250 generates metacommands respectively corresponding to the background, single color, and multicolored areas. In detail, the command generator 250 may determine the background area as one of a gradation background and a multicolored background. If the background area is determined as the single color background or the gradation background, the command generator 250 may generate a metacommand corresponding to the appropriate background type. For example, if the background area is determined as the single color background, the command generator 250 may generate a metacommand depicting a rectangle having a color of the background area. If the background area is determined as the gradation background, the command generator 250 may generate a metacommand determining an inclination direction and a type of a color corresponding to the background area.

The command generator 250 determines whether the multicolored area is rectangular. If the multicolored area is not rectangular, the command generator 250 may divide the multicolored area into a plurality of rectangular areas and generate metacommands depicting positions, etc. of the rectangular areas.

The command generator 250 may detect a contour of the single color area, simplify the detected contour as straight lines and Bezier curve sections, and generate metacommands corresponding to a series of straight lines and curve sections.

The file generator 260 generates a metafile based on the generated metacommand. In detail, the file generator 260 may generate a metafile including a raster image corresponding to a metacommand and an area generated by the command generator 250. For example, the file generator 260 may include only metacommands corresponding to the single color background and the gradation background in the metafile. Also, the file generator 260 may include a raster image corresponding to the multicolored background and a metacommand depicting the corresponding raster image in the metafile.

The file generator 260 may perform scaling to lower a resolution of the raster image corresponding to the multicolored background and include the scaled raster image in the metafile.

Also, the file generator 260 may include a raster image corresponding to the multicolored area and a metacommand depicting a position, etc. of the corresponding raster image in a form corresponding to the multicolored background in the metafile. The file generator 260 may include raster images corresponding to clipping areas, into which the multicolored area is divided if the multicolored area is not rectangular, and metacommands depicting positions of the raster images in the metafile. Also, the file generator 260 may perform scaling with respect to a raster image corresponding to the multicolored area and include the scaled raster image in the metafile.

For the single color area, the file generator 260 may include a vectored metacommand in the metafile. As described above, in the present exemplary embodiment, a metacommand corresponding to a single color area may be included in a metafile. Therefore, a metafile having a smaller size may be generated.

The file generator 260 may perform a lossless compression to include the metacommand in the metafile.

The controller 270 controls elements of the image scanning apparatus 200. In detail, if a scan command or a metafile generating command is input through the user interface unit 230, the controller 270 may control the scanner 240 to scan an original image and generate a raster image, control the command generator 250 to generate a metacommand corresponding to the generated raster image, and control the file generator 260 to generate a metafile including the generated metacommand.

As described above, the image scanning apparatus 200 according to the present exemplary embodiment may divide an input raster image into a background area, a single color area, and a multicolored area. Also, the image scanning apparatus 200 may generate a metacommand according to a method optimized with respect to the background, single color, and multicolored areas. Therefore, the image scanning apparatus 200 may generate a metafile having a small size. In addition, the image scanning apparatus 200 may vector the single color area and store a command corresponding to this in the metafile. Therefore, the image scanning apparatus 200 may generate a metafile having a smaller size.

The present general inventive concept, such as the method of performing image compensation as described above, can also be embodied as computer-readable codes on a computer-readable medium. The computer-readable medium can include a computer-readable recording medium and a computer-readable transmission medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

Although a few embodiments of the present general inventive concept have been shown and described, it will be appreciated by those skilled in the art that changes may be made in these embodiments without departing from the principles of the general inventive concept, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of converting a raster image, the method comprising:

   dividing the raster image into a background area, a single color area, and a multicolored area; generating metacommands respectively corresponding to the background area, the single color area, and the multicolored area; and generating a metafile based on the generated metacommands, wherein the generation of the metacommands comprises:

      vectoring a contour of the single color area, and generating a metacommand corresponding to the vectored contour.

2. The method of claim 1, further comprising:

   determining the background area as one of a single color background, a gradation background, and a multicolored background, wherein the generation of the metacommands comprises:

      if the background area is determined as the single color background, generating a metacommand depicting a rectangle having a color of the background area, and if the background area is determined as the gradation background, generating a metacommand determining an inclination direction and a type of a color corresponding to the background area.

3. The method of claim 2, wherein the generation of the metafile comprises:

   if the background area is determined as the multicolored background, generating a metafile comprising a raster image corresponding to the background area.

4. The method of claim 2, further comprising:

   determining a transparency which is to be applied to the background area, wherein the generation of the metafiles comprises generating a metafile comprising a metacommand corresponding to the determined transparency.

5. The method of claim 1, further comprising:

   changing a resolution of a raster image corresponding to the multicolored area, wherein the generation of the metafile comprises generating a metafile comprising the raster image having the changed resolution.

6. The method of claim 5, further comprising:

   determining a shape of the multicolored area; and if the determined shape of the multicolored area is not rectangular, dividing the multicolored area into a plurality of rectangular areas, wherein the change of the resolution comprises changing resolutions of a plurality of raster images respectively corresponding to the plurality of rectangular areas.

7. The method of claim 6, wherein the generation of the metacommands comprises generating metacommands respectively corresponding to the plurality of rectangular areas.

8. The method of claim 1, wherein the generation of the metacommands comprises:

   detecting a contour of the single color area; simplifying the detected contour; and generating a metacommand corresponding to the simplified contour.

9. The method of claim 8, wherein the simplifying the detected contour is simplified as only straight lines and Bezier curves.

10. The method of claim 1, further comprising:

    compressing the generated metacommands, wherein the generation of the metacommands is generated based on the compressed metacommands.

11. A raster image conversion apparatus, comprising:

a communication interface unit to receive a raster image;
a command generator to divide the raster image into a background area, a single color area, and a multicolored area and to generate metacommands respectively corresponding to the background area, the single color area, and the multicolored area; and
a file generator to generate a metafile based on the generated metacommands,
wherein the command generator vectors a contour of the single color area and generates a metacommand corresponding to the vectored contour.

12. The raster image conversion apparatus of claim 11, wherein the command generator determines the background area as one of a single color background, a gradation background, and a multicolored background, if the background area is determined as the single color background, generates a metacommand depicting a rectangle having a color of the background area, and if the background area is determined as the gradation background, generates a metacommand determining an inclination direction and a type of a color corresponding to the background area.

13. The raster image conversion apparatus of claim 12, wherein if the background area is determined as the multicolored background, the file generator generates a metafile comprising a raster image corresponding to the background area.

14. The raster image conversion apparatus of any one of claims 11 to 13, wherein the command generator detects a contour of the single color area, simplifies the detected contour, and generates a metacommand corresponding to the simplified contour.

15. The raster image conversion apparatus of any one of claims 11 to 14, wherein the file generator compresses the generated metacommands and generates a metafile based on the compressed metacommands

EP 2 597 616 A2

# FIG. 1

START

101 — PROVIDE RASTER IMAGE

102 — SENSE BACKGROUND AREA AND TYPE OF BACKGROUND AREA FROM RASTER IMAGE

103 — STORE COMMAND WHICH IS TO MAP BACKGROUND WITH METAFILE

104 — SENSE MULTICOLORED AREA

105 — STORE MULTICOLORED AREA IN METAFILE

106 — SENSE SINGLE COLOR AREA

107 — STORE SINGLE COLOR AREA IN METAFILE

END

# FIG. 2

## Photo Design Studio

Photo Design Studio is a multipurpose tool for dealing with photographic images. It greatly speeds up and enhances the process of getting images from your digital camera to the web.

It supports everything from downloading the images from your camera or memory card, through rotating, resizing, conversion, previewing, adding comments, creating thumbnails and generating fully customisable HTML index pages ready for uploading to your website.

1(234)567-89-00

Office1, 10 bldg.

# FIG. 3

301

302

303

# FIG. 4

401

DATA TRANSMISSION BUS

402 INPUT APPARATUS

CPU

403

Memory

404

PROGRAM COMMAND

405

# FIG. 5

START

501 — SENSE MULTICOLORED AREA

502 — DETERMINE SHAPE OF
MULTICOLORED AREA

503 — IS
MULTICOLORED AREA
RECTANGULAR? —— Yes

No

504 — DETERMINE CLIPPING AREAS
OF MULTICOLORED AREA

505 — ADJUST SIZE OF RASTER IMAGE
OF AREA TO PRESET RESOLUTION

506 — DEFINE SHAPE OF MULTICOLORED
AREA BY USING COMMAND OF METAFILE

507 — COMPRESS COMMAND OF METAFILE
AND RASTER IMAGE PIECE

508 — STORE METAFILE COMMAND
AND IMAGE PIECE IN METAFILE

END

# FIG. 6

START

601 — TRACK INTERNAL AND EXTERNAL CONTOURS OF SINGLE COLOR AREA

602 — ESTIMATE COLOR OF SINGLE COLOR AREA

603 — ESTIMATE CONTOUR

604 — GENERATE A SERIES OF COMMANDS CORRESPONDING TO CONTOUR

605 — COMPRESS A SERIES OF COMMANDS

606 — STORE COMPRESSED COMMANDS IN METAFILE

END

# FIG. 7

# FIG. 8A

# FIG. 8B

# FIG. 9

# FIG. 10

# FIG. 11

```
         ( START )
             │
             ▼
┌─────────────────────────┐
│  MODIFY COORDINATE OF KEY│~1101
│  POINT OF SIMPLIFIED     │
│  CONTOUR                 │
└─────────────────────────┘
             │
             ▼
┌─────────────────────────┐
│  ESTIMATE SIMPLIFIED     │~1102
│  CONTOUR AS A SERIES OF  │
│  STRAIGHT LINES AND      │
│  CURVE SECTIONS          │
└─────────────────────────┘
             │
             ▼
┌─────────────────────────┐
│  REDUCE THE NUMBER       │~1103
│  OF CURVE SECTIONS       │
└─────────────────────────┘
             │
             ▼
┌─────────────────────────┐
│  CONVERT A SERIES OF     │~1104
│  STRAIGHT LINES AND      │
│  CURVE SECTIONS INTO     │
│  COMMAND OF METAFILE     │
└─────────────────────────┘
             │
             ▼
         ( END )
```

# FIG. 12

# FIG. 13A

1301
1302
β=0.9
1302
α=0.5
1303
1303

# FIG. 13B

α=0.7
β=0.7

# FIG. 13C

α=0.4
β=0.1

# FIG. 13D

α=0.2
β=0.2

# FIG. 14

# FIG. 15

# FIG. 16

1600

# FIG. 17

# FIG. 18

<u>100</u>

300 — External Apparatus

160

110 — COMMUNICATION INTERFACE UNIT

120 — STORAGE UNIT

130 — USER INTERFACE UNIT

CONTROLLER

150 — FILE GENERATOR

140 — COMMAND GENERATOR

# FIG. 19

200

400 — External Apparatus

270

210 — COMMUNICATION INTERFACE UNIT

220 — STORAGE UNIT

230 — USER INTERFACE UNIT

CONTROLLER

260 — FILE GENERATOR

250 — COMMAND GENERATOR

240 — SCANNER

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2011146617
- KR 1020120035063

- US 7289122 B

**Non-patent literature cited in the description**

- ITU-T Mixed Raster Content model as JPEG 2000 Architectural Framework. *ISO/IEC JTC1/SC29/WG1 N542,* 30 June 1997